(19) Europäisches Patentamt
European Patent Office
Office européen des brevets

(11) **EP 4 571 905 A1**

(12) **EUROPEAN PATENT APPLICATION**

(43) Date of publication:
**18.06.2025  Bulletin 2025/25**

(21) Application number: **23290045.6**

(22) Date of filing: **13.12.2023**

(51) International Patent Classification (IPC):
*H01M 8/04225* (2016.01)    *H01M 8/04223* (2016.01)
*H01M 8/04302* (2016.01)    *H01M 8/04746* (2016.01)
*H01M 8/04858* (2016.01)    *H01M 8/04089* (2016.01)

(52) Cooperative Patent Classification (CPC):
**H01M 8/04225; H01M 8/04253; H01M 8/04302;
H01M 8/04753; H01M 8/0491;** H01M 8/04097;
H01M 2250/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Airbus Operations GmbH
21129 Hamburg (DE)**
• **Airbus Operations (S.A.S.)
31060 Toulouse Cedex 9 (FR)**

(72) Inventors:
• **Liphardt, Leonard
21129 Hamburg (DE)**
• **Allias, Jean-François
31060 Toulouse Cedex 9 (FR)**
• **Filliatre, Lucas
31060 Toulouse Cedex 9 (FR)**

(74) Representative: **LKGLOBAL
Lorenz & Kopf Patentanwalt
Attorney at Law PartG mbB
Brienner Straße 11
80333 München (DE)**

(54) **SOFT-START STRATEGY OF A FUEL CELL**

(57)    A method (100) for a soft-start strategy of a fuel cell (10), comprising the following steps: Providing (102) a fuel cell (10), wherein the fuel cell (10) is connected to load (12), Providing (104) a capacitor (14), wherein the capacitor (14) is connected in between the fuel cell (10) and the load (12),
wherein the fuel cell (10) comprises an anode (16) and a cathode (18) and the anode (16) and the cathode (18) are in a preconditioned state,
filling (106) the cathode (18) with a mass rate derived from a proportion of an input gas and a used gas, and a predefined current,
such that the predefined current does not exceed a maximum current during a precharge of the capacitor (14).

**Fig. 1**

EP 4 571 905 A1

## Description

Technical Field

The present invention relates to a method for a soft-start strategy of a fuel cell, a fuel cell system capable to execute said method and an aircraft comprising said fuel cell system.

Background

In electrical architectures capacitors may be used to smooth the current. During a start up sequence the capacitor is empty and needs to be filled before the flowing current goes to a converter and/or a load. A too high current in the capacitor may influence the capacitor in an undesired manner and a too low voltage may not be accepted by a converter because of its voltage range. However, extending the converter's range may lead to a bigger and heavier converter.

The weight of the electrical architectures is especially crucial in the propulsion of a fuel cell aircraft. The propulsion should be made possible with several channels, wherein a channel is made out of several fuel cell systems. To guarantee the stability of the network and not to pollute the environment, it is mandatory to comply with some power quality constraints. To do so, electrical filters are integrated at the output and/or inputs of the different converters which pollutes the overall network. Those filters on which the capacitor needs to be preloaded before reaching the steady state operation.

Since the capacitors need to be discharged after each use, they also have to be recharged during the fuel cell system startup procedure, by current from the fuel cell, before starting the converter they are associated with.

The precharge of these capacitors needs to be performed carefully since each capacitor is sized to handle a specific inrush current.

In case the current flowing through the capacitor is too high, even during a low period of time, potential degradation and potentially destruction of the capacitor can appear. Therefore, it is necessary to control and limit the inrush current at capacitor level.

The usual way to precharge a capacitor is to implement a "preload system" at its input in order to limit the inrush current:
During the precharge of the capacitor, the current will be limited by the resistor of the preload system, then once the precharge is finished, the preload system will be disconnected from the network so nominal current can be delivered to the converter.

For every converter connected to the fuel cell, such a preload system is needed. The drawback is that many devices are needed to ensure the precharge function. This means added weight and volume necessary for the installation, which are two critical points when working on the propulsion of a fuel cell aircraft.

Therefore, there is a need of a different start up mechanism.

Summary of the invention

It is an object, to provide an operation strategy with which a fuel cell system can be started with a simplified electrical architecture and combine the simplified electrical architecture with challenging start up mechanisms.

This object is achieved by means of the subjects of the independent claims. Illustrative embodiments will be found in the dependent claims and the following description.

In this idea, an operation strategy is proposed with which a fuel cell system can be started with a simplified electrical architecture and combine the simplified electrical architecture with challenging start up mechanisms.

In other words, the objective of this start-up strategy is to perform the precharge of the capacitors without using a preload system but by controlling the voltage rising so it is slow enough to limit the inrush current at the capacitor. This allows the removal of the preload system, resulting in a reduction of weight and volume.

According to one aspect a method for a soft-start strategy of a fuel cell is provided. The method comprises the following steps:

Providing a fuel cell, wherein the fuel cell is connected to load,
Providing a capacitor, wherein the capacitor is connected in between the fuel cell and the load,
wherein the fuel cell comprises an anode and a cathode and the anode and the cathode are in a preconditioned state,
filling the cathode with a mass rate derived from a proportion of an input gas and a used gas, and a predefined current,
such that the predefined current does not exceed a maximum current during a precharge of the capacitor.

A fuel cell is an electrochemical apparatus that produces electricity through the controlled interaction of hydrogen and oxygen. At its core, this technology leverages the principle of electrochemical conversion, directly translating the chemical energy stored in hydrogen into a readily usable form of electrical energy.

Fuel cells encompass a range of configurations, but most commonly, they consist of a fuel cell stack, which comprises multiple individual fuel cells connected in series. Each fuel cell is equipped with essential components, including an anode, a cathode, and an electrolyte. The electrolyte plays a crucial role in facilitating the transport of ions, usually protons, between the anode and cathode, enabling the electrochemical reactions to occur, liberate electrons, and, in turn, generate electrical power.

The system typically requires a supply of hydrogen, which can originate from various sources, including compressed hydrogen gas, liquid hydrogen, or the reforming of hydrocarbons like natural gas or methanol. Oxygen may be supplied from the air to the cathode, where it participates in the chemical reactions.

A capacitor is a passive electronic component that stores electrical energy in an electric field. It is typically composed of two conductive plates separated by an insulating material known as a dielectric. When a voltage difference exists between the plates, the capacitor stores energy in the electric field. Capacitors are widely used in electronic circuits for various purposes smoothing voltage fluctuations. They come in different types, such as electrolytic capacitors, ceramic capacitors, and tantalum capacitors, each with specific characteristics suitable for different applications.

The cathode is filled with a mass rate derived from a proportion of an input gas and a used gas, and a predefined current. This derivation leads to the effect, that the predefined current does not exceed a maximum current during a precharge of the capacitor. The predefined current may be 90% of the maximum current during the precharge of the capacitor, preferably 95% of the maximum current.

According to one embodiment, the preconditioned state comprises a hydrogen/nitrogen mixture as input gas and used gas.

The hydrogen/nitrogen mixture as input gas and used gas, in other words $H_2/H_2$ conditioning is the preferred conditioning to avoid degradation during the startup. For example, $H_2/H_2$ conditioned stacks will just have voltages of approx. 100 V per sub channel during the $H_2$ fill which is below the lower limit of, for example a DC/DC converter.

An approach to increase the stack voltage during the startup phase is to execute the air fill at the same time as the $H_2$ fill. An air fill leads to an increase in the stack voltage. Due to the electrical connection of the stacks with the capacitor a current will flow through the stack and load the capacitor.

Also, the current flow would cause a voltage drop and would hinder the stack to reach a voltage above, for example, 0,850 mV/Cell. To avoid a too high current flow the air fill may be done with an air mass flow, which is needed for the later IDLE phase, so it can be guaranteed that the current will not be higher than the IDLE current of approximately 50 A.

The term "IDLE" typically denotes a condition when a device or system is not actively engaged in productive work or output. In the context of a fuel cell system or startup procedures, the IDLE phase signifies a state where the system is at rest or running at a minimal operational level without actively producing power or engaged in significant energy-consuming tasks.

Having an air mass flow similar to IDLE conditions will not guarantee a current lower than 50A during soft start. In IDLE the current drawn is close to 50A due to the overall loads consumption. During a start-up, preferably no loads are functioning, having an air mass flow equal to the one in IDLE will lead to a specific fuel cell voltage variation. This voltage variation will be seen by the capacitors, and being a passive element they will draw some current based on the following low: I = C x dV/dt, with I the current drawn, C the value of the capacitor in Farad, dV/dt the fuel cell voltage variation over a 1s period.

Therefore, the current drawn during the start-up could be higher than 50A for an air mass flow similar to the one used during IDLE.

The capacitor precharge needs to be done during $H_2/H_2$ and Air/Air startup. The converter may be supplied with a voltage between 460 V and 850 V. This voltage window makes the startup strategy more complicated. In the following description, a distinction is made between an $H_2/H_2$ and Air/Air start.

According to one embodiment, the preconditioned state comprises air as input gas and used gas.

Normally, the $H_2$ protection time should be chosen so that an Air/Air start does not occur. However, there are cases where Air/Air conditioning cannot be prevented. Such cases can be a maintenance or repair. As hydrogen is supplied to the fuel cell, the stack voltage rises instantaneously to OCV. As already explained for the $H_2/H_2$ startup, a current flows immediately as soon as the stack voltage increases. However, in this case it is not possible to control the current by the "lambda-one" strategy. The current is a result of electrical resistance of the electric circuit, where the current flows through.

In addition to the degradation mechanism, which might appear due to fuel starvation and can be handled by a control strategy, there is another mechanism due to local fuel starvation, which only can be weakened and not completely avoided. This local fuel starvation mechanism has to be accepted by the fuel cell stack.

According to one embodiment, the input gas is determined by the reciprocal value of the oxygen concentration of the input gas. For example, if the oxygen concentration is 20%, the input gas needs to be five times as big as if the oxygen concentration is 100%.

According to one embodiment, the derivation of the mass rate for filling the cathode takes into account the Faraday equation:

$$m = \frac{M \cdot I \cdot t}{z \cdot F}$$

wherein

M is molar mass,
I is current,
t is time,
F is Faraday constant,
z is charge number,

wherein the mass rate is derived from the predefined current, wherein the predefined current does not exceed a maximum current during a precharge of the capacitor.

According to one embodiment, the proportion of the input gas and the used gas is equal 1. The proportion of the input gas and the used gas is defined as "Lambda".

As long as the fuel cell's mass transport resistance is the dominating resistance the current can be controlled by the "Lambda-One" strategy. In this case proportion of the input gas and the used gas is equal 1, in other words the amount of input gas corresponds to the amount of used gas.

In this specific case it is very important to remove the oxygen from the all stack's anodes as fast and as even as possible to avoid degradation due to fuel starvation.

According to one embodiment, the method comprises the providing of a converter. A converter refers to an electrical device or component used to modify or control the flow of electrical energy between different voltage, current, or frequency levels within an electrical system. In the context of a fuel cell system or startup procedures, a converter is configured to regulate the voltage levels supplied to various components, manage the electrical output from the fuel cell stacks, or adapt the electrical characteristics to suit the requirements of different system components or external loads.

According to one embodiment, the predefined current is below 50 A, preferably below 100 A and most preferably below 50 A.

According to one embodiment, a capacity of the capacitor below 10 F, preferably below 5 F and most preferably below 1 F.

According to one embodiment, the method is executed at temperature of below 0° C. Hydrogen fuel cells operate optimally at elevated temperatures. Cold conditions may impact the electrochemical reactions within the fuel cell, reducing performance and efficiency during startup. Hydrogen, typically stored as a gas or liquid, might experience issues with freezing or becoming denser in colder temperatures, affecting its availability for the fuel cell. Further, cold temperatures can cause water within the fuel cell to freeze, potentially blocking channels or affecting the movement of ions through the electrolyte, leading to decreased performance. Cold conditions can slow down or impede the activation of the fuel cell stack, affecting the production of electricity.

Soft starting involves gradually increasing the power output, allowing for a more controlled warm-up of critical components within the fuel cell system. This gradual increase aids in bringing the system components, like the membrane, catalysts, and other critical parts, to their optimal operating temperatures more efficiently.

According to an aspect a fuel cell system is provided. The fuel cell system comprises a fuel cell, wherein the fuel cell comprises an anode and a cathode.

The fuel cell system further comprises a capacitor, wherein the fuel cell system is adapted to execute a above mentioned method.

The objective of this start-up strategy is to perform the precharge of the capacitors in the fuel cell system without using a preload system but by controlling the voltage rising so it is slow enough to limit the inrush current at capacitors level. This allows the removal of the preload system, resulting in a reduction of weight and volume.

According to one aspect, an aircraft comprises an above-mentioned fuel cell system. The weight of the electrical architectures is especially crucial in the propulsion of a fuel cell aircraft. Therefore, an operation strategy is proposed with which a fuel cell system in an aircraft can be started with a simplified electrical architecture and combines the simplified electrical architecture with challenging start up mechanisms.

This allows the removal of the preload system, resulting in a reduction of weight and volume.

Brief description of the figures

Fig. 1 shows a flowchart of a method for a soft-start strategy of a fuel cell;

Fig. 2 shows a fuel cell system;

Fig. 3 shows an aircraft comprising a fuel cell system; and

Fig. 4 shows a chart of soft-start strategy of a fuel cell of voltage and current over time.

Detailed description

The illustrations in the figures are schematic and not to scale. If the same reference signs are used in different figures in the following description of the figures, they designate identical or similar elements. However, identical or similar elements can also be designated by different reference symbols.

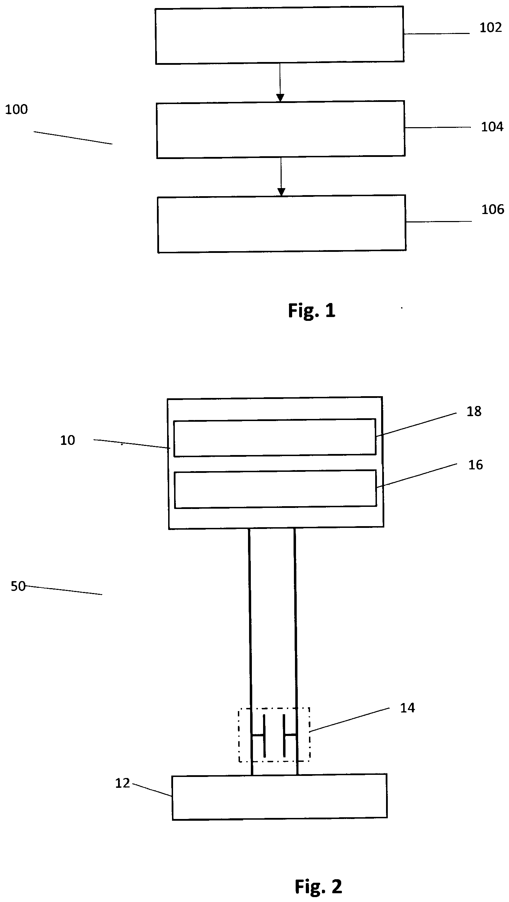

Fig. 1 shows a method 100 for a soft-start strategy of a fuel cell 10 comprises several steps. In a first step 102 a fuel cell 10 is provided, wherein the fuel cell 10 is connected to load 12. In a second step 104 a capacitor 14 is provided, wherein the capacitor 14 is connected in between the fuel cell 10 and the load 12. The fuel cell 10 comprises an anode 16 and a cathode 18. The anode 16 and the cathode 18 are in a preconditioned state. In a last step, the 106 the cathode 18 are filled with a mass rate derived from a proportion of an input gas and a used gas, and a predefined current, such that the predefined current does not exceed a maximum current during a precharge of the capacitor 14.

In the shown example the derivation of the predefined current takes into account the Faraday equation:

$$m = \frac{M \cdot I \cdot t}{z \cdot F}$$

wherein

M is molar mass,
I is current,
t is time,
F is Faraday constant,
z is charge number,

The specific inrush current of the capacitor 14 is below the current I in the Faraday equation. Hereby, a current too high flowing through the capacitor may be avoided, since even during a low period of time, potential degradation and potentially destruction of the capacitor can appear. Hence, it is possible to control and limit the inrush current at capacitor level.

One approach to heighten the stack voltage during the startup phase involves simultaneous Air and $H_2$ fills. The introduction of Air results in a voltage increase within the stack, as the stacks are electrically linked to the capacitor, causing a flow of current through the stack, thereby charging the capacitor.

However, this current flow might lead to a voltage drop, hindering the stack from reaching a voltage beyond 0.850 V/Cell. To prevent excessive current flow, the Air fill should align with the air mass flow required for the subsequent IDLE phase, ensuring the current does not exceed the IDLE current.

$H_2/H_2$ conditioning stands as the preferred method to avert degradation during startup. Stacks conditioned with $H_2/H_2$ exhibit voltages around 100 V per sub-channel during $H_2$ fill, which falls below the DC/DC converter's lower limit.

Normally, the $H_2$ protection time should be set to prevent an Air/Air start. Yet, situations might arise, such as maintenance or repair, where Air/Air conditioning becomes unavoidable. Upon hydrogen supply to the fuel cell, the stack voltage immediately surges to OCV (Open Circuit Voltage). Similar to the $H_2/H_2$ startup, current flows promptly as the stack voltage rises. However, in this scenario, controlling the current via the "lambda-one" strategy is infeasible. The current results from the electrical circuit's resistance, through which the current flows.

It's crucial to note that capacitor precharge is essential during both $H_2/H_2$ and Air/Air startups. The converter's voltage supply window, ranging between 460 V and 850 V, complicates the startup strategy.

Fig. 2 shows a fuel cell system 50. The fuel cell system 50 comprises a fuel cell 10, wherein the fuel cell 10 comprises an anode 16 and a cathode 18. Furthermore, the fuel cell system 50 comprises a capacitor 14.

The fuel cell system 50 is adapted to execute a method 100 for a soft-start strategy of a fuel cell. The cathode 18 is filled with a mass rate derived from a proportion of an input gas and a used gas, and a predefined current, such that the predefined current does not exceed a maximum current during a precharge of the capacitor 14.

This provides an operation strategy with which the fuel cell system 50 can be started with a simplified electrical architecture and combine the simplified electrical architecture with challenging start up mechanisms.

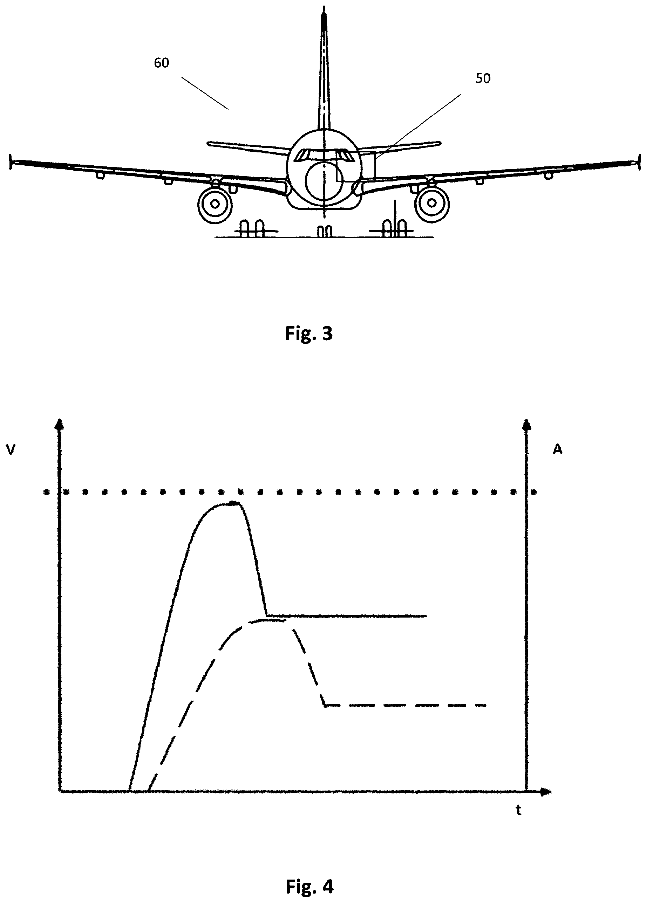

Fig. 3 shows an aircraft 60 comprising a fuel cell system 50, wherein the fuel cell system 50 is adapted to execute the described method 100 for a soft-start strategy of a fuel cell 10. The operation strategy is proposed, such that the aircraft 50 can be started with a simplified electrical architecture and combines the simplified electrical architecture. This allows the removal of the preload system, resulting in a reduction of weight and volume.

The fuel cell system is not necessarily located inside fuselage.

Fig. 4 shows chart of soft-start strategy of a fuel cell with voltage (solid line) and current (dashed line) over time. The current is controlled by the described "Lambda-One" strategy.

When a capacitor is charged, the risk of having a high inrush current when starting the overall system is higher since the capacitor current is directly linked to the voltage variation at its input, $I\_capa = C * dV / dt$.

As can be seen, the maximum voltage (indicated by the dotted line) is not exceeded. This start-up strategy allows to perform the precharge of the capacitors without using a preload system but by controlling the voltage rising so it is slow enough to limit the inrush current at the capacitor.

Reference Signs

| | |
|---|---|
| 10 | Fuel cell |
| 12 | Load |
| 14 | Capacitor |
| 16 | Anode |
| 18 | Cathode |
| 50 | Fuel cell system |
| 60 | Aircraft |
| 100 | Method for a soft-start strategy of a fuel cell |
| 102 | Providing a fuel cell |
| 104 | Providing a capacitor |
| 106 | filling the cathode |

**Claims**

1. A method (100) for a soft-start strategy of a fuel cell (10), comprising the following steps:

Providing (102) a fuel cell (10), wherein the fuel cell (10) is connected to load (12),

Providing (104) a capacitor (14), wherein the capacitor (14) is connected in between the fuel cell (10) and the load (12),

wherein the fuel cell (10) comprises an anode (16) and a cathode (18) and the anode (16) and the cathode (18) are in a preconditioned state,

filling (106) the cathode (18) with a mass rate derived from a proportion of an input gas and a used gas, and a predefined current,

such that the predefined current does not exceed a maximum current during a precharge of the capacitor (14).

2. Method (100) according to claim 1, wherein the preconditioned state comprises a hydrogen/nitrogen mixture as input gas and used gas.

3. Method (100) according to claim 1, wherein the preconditioned state comprises air as input gas and used gas.

4. Method (100) according to claim 3, wherein the input gas is determined by the reciprocal value of the oxygen concentration of the input gas.

5. Method (100) according to one of the preceding claims, wherein the derivation of the mass rate for filling the cathode (18) takes into account the Faraday equation:

$$m = \frac{M \cdot I \cdot t}{z \cdot F}$$

wherein

M is molar mass,
I is current,
t is time,
F is Faraday constant,
z is charge number,
wherein the mass rate is derived from the predefined current, wherein the predefined current during does not exceed a maximum current during a precharge of the capacitor (14).

6. Method (100) according to one of the preceding claims, wherein the proportion of the input gas and the used gas is equal 1.

7. Method (100) according to one of the preceding claims, further comprising the providing of a converter.

8. Method (100) according to one of the preceding claims, wherein the predefined current is below 1000 A, preferably below 100 A and most preferably below 50 A.

9. Method (100) according to one of the preceding claims, wherein a capacity of the capacitor below 10 F, preferably below 5 F and most preferably below 1 F.

10. Method (100) according to one of the preceding claims, wherein the method is executed at temperature of below 0° C.

11. A fuel cell system (50), comprising

a fuel cell (10), wherein the fuel cell (10) comprises an anode (16) and a cathode (18),
a capacitor (14),
wherein the fuel cell system (50) is adapted to execute a method (100) according to one of the preceding claims.

12. An aircraft (60) comprising a fuel cell system (50) according to claim 11.

**Fig. 1**

**Fig. 2**

**Fig. 3**

**Fig. 4**

Europäisches
Patentamt

European
Patent Office

Office européen
des brevets

# EUROPEAN SEARCH REPORT

**Application Number**

EP 23 29 0045

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2007 026933 A (TOYOTA MOTOR CORP) 1 February 2007 (2007-02-01) * claims 1-8 * * paragraphs [0019] - [0055] * ----- | 1-12 | INV. H01M8/04225 H01M8/04223 H01M8/04302 H01M8/04746 |
| X | US 2003/207162 A1 (REISER CARL A [US]) 6 November 2003 (2003-11-06) * claims 1-10, 14 * * paragraphs [0006], [0010], [0014] - [0018] * ----- | 1-12 | H01M8/04858 ADD. H01M8/04089 |

TECHNICAL FIELDS
SEARCHED      (IPC)

H01M

The present search report has been drawn up for all claims

| Place of search | Date of completion of the search | Examiner |
|---|---|---|
| Munich | 19 July 2024 | Perednis, Dainius |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**EP 4 571 905 A1**

## ANNEX TO THE EUROPEAN SEARCH REPORT
## ON EUROPEAN PATENT APPLICATION NO.

EP 23 29 0045

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2024

| Patent document cited in search report | Publication date | Patent family member(s) | Publication date |
|---|---|---|---|
| JP 2007026933 A | 01-02-2007 | NONE | |
| US 2003207162 A1 | 06-11-2003 | AU 2003295310 A1 | 30-04-2004 |
| | | DE 10392564 T5 | 30-06-2005 |
| | | JP 2005531916 A | 20-10-2005 |
| | | US 2003207162 A1 | 06-11-2003 |
| | | WO 2004025752 A2 | 25-03-2004 |

EPO FORM P0459

For more details about this annex : see Official Journal of the European Patent Office, No. 12/82

10